# EUROPÄISCHE PATENTANMELDUNG

(11) **EP 0 796 673 A1**
(43) Veröffentlichungstag der Anmeldung: **24.09.1997**
(21) Anmeldenummer: 97103534.0
(22) Anmeldetag: 04.03.1997
(51) Int. Cl.: B09C 1/10

(54) **Verfahren und Vorrichtung zum biologischen Reinigen und Regenerieren von kontaminiertem Erdreich**

(30) Priorität: 21.03.1996 DE 19610993
(71) Anmelder: Polyfame Engineering Ltd., Wanchai, Hongkong (HK)
(72) Erfinder: Storm van Leeuwen, Ewoud, c/o Polyfame Eng. Ltd., Wanchai (HK)
(74) Vertreter: Türk, Gille, Hrabal, Leifert

(57) **Zusammenfassung**

Es ist ein Verfahren zum biologischen Reinigen und Regenerieren von kontaminiertem Bodenmaterial wie Erdreich beschrieben, bei dem Wasser durch das Bodenmaterial zwangsweise hindurchgeleitet und danach zum Abtrennen von aus dem Bodenmaterial mitgenommenen Fremdstoffen das Wasser filtriert wird. Außerdem ist eine in Modulbauweise ausgebildete Vorrichtung zum Ausführen dieses Verfahrens beschrieben.

## Beschreibung

Die Erfindung betrifft ein Verfahren zum biologischen Reinigen und Regenerieren von kontaminiertem Erdreich. Außerdem betrifft die Erfindung eine Vorrichtung zum Durchführen dieses Verfahrens.

Wenn hier vom Reinigen und Regenerieren und von kontaminiertem Erdreich gesprochen wird, so ist darunter ganz allgemein das Behandeln von Bodenmaterial und nicht nur von Erde gemeint, um dieses Material biologisch zu reinigen und zu regenerieren, damit keine unzulässige Menge Schadstoff in ihm zurückbleibt und das Bodenmaterial somit als unschädlicher und unproblematischer Untergrund benutzt werden kann.

Die Erfindung ist aber besonders geeignet für die Behandlung von kontaminiertem Erdreich.

In den meisten Fällen können kontaminiertes Bodenmaterial und kontaminiertes Grundwasser biologisch gereinigt und regeneriert werden. So ist es bekannt, Öl und flüssige Brennstoffe bzw. Brennstoffprodukte auf diese Weise aus Bodenmaterial und/oder Grundwasser abzuscheiden und zu entfernen, obwohl eine vollständige Reinigung mit nur geringer Konzentration an Schadstoff-Rückständen nur schwierig zu erreichen ist.

Neuere Forschungsergebnisse haben erwiesen, daß es möglich ist, Schwermetalle aus Bodenmaterial durch gesteuerte biologische Prozesse zu extrahieren und zu entfernen. Es hat sich dabei auch gezeigt, daß eine Kombination eines biologischen Abbaus von Kohlenwasserstoffen mit biologischer Extraktion von Schwermetallen sehr wirksam ist.

Die bisher übliche biologische Reinigung von kontaminiertem Bodenmaterial ist sehr zeitaufwendig. Die zu entfernenden Verunreinigungen müssen sich in Wasser auflösen, bevor Mikroorganismen sie durch ihre Zellmembranen transportieren können. An vielen Stellen findet man alte Industriestandorte, deren Bodenmaterial stark verunreinigt und/oder vergiftet ist. In einigen Fällen sind die Reinigungskosten sogar höher als der Wert der Immobilie, wenn oder nachdem sie sauber bzw. nicht unzulässig hoch mit Schadstoffen belastet ist.

Aufgabe der Erfindung ist es, die Möglichkeit zu eröffnen, kontaminiertes Erdreich oder sonstiges Bodenmaterial kostengünstig biologisch reinigen und regenerieren zu können.

Diese Aufgabe wird erfindungsgemäß mit einem Verfahren der eingangs genannten Gattung gelöst, welches die Merkmale des kennzeichnenden Teiles des Anspruches 1 aufweist. Außerdem wird diese Aufgabe mit einer Vorrichtung gelöst, welche die Merkmale des unabhängigen Vorrichtungs-Anspruches aufweist.

Vorteilhafte Ausgestaltungen des erfindungsgemäßen Verfahrens und der erfindungsgemäßen Vorrichtung sind Gegenstand der jeweiligen abhängigen Unteransprüche.

Erfindungsgemäß werden zwei Möglichkeiten zum Reinigen und Regenerieren von verseuchten oder auf andere Weise verunreinigten Böden eröffnet. Das Bodenmaterial kann preisgünstig und daher häufig auch ohne finanzielle Unterstützung der öffentlichen Hand gereinigt und einer erneuten Benutzung zugeführt bzw. regeneriert werden. Finanzielle Zuschüsse der öffentlichen Hand in Fällen einer besonders hohen Verunreinigung können niedriger als bisher möglich gehalten werden.

In beiden Fällen sind die Kosten der Reinigung und Regeneration des Bodenmaterials um ein Drittel oder sogar mehr als die Hälfte geringer als die Kosten der bisher bekannten Verfahren zum biologischen Reinigen und Regenerieren von kontaminiertem Erdreich oder von kontaminierten Böden.

Das Problem des bei der biologischen Reinigung und Regeneration von kontaminiertem Erdreich oder von kontaminierten Böden bisher erforderlichen hohen Zeitaufwandes wird erfindungsgemäß durch folgende Maßnahmen vermieden:

Eine erste optimale Bedingung für einen schnellen biologischen Abbau bilden fließendes Wasser, Sauerstoff und Nährstoffe, wobei Temperaturen über 15° C die Abbaugeschwindigkeit erhöhen, aber nicht entscheidend sind.

Um die biologische Ansprechbarkeit der Verunreinigungen zu verbessern, sind zwei Schritte entwickelt worden:
a) die Verwendung spezieller Mikroorganismen, d. h. bestimmter Pilzkonturen und spezieller Bakterien, und
b) die Verwendung chemischer und/oder natürlicher Emulgatoren und Gelatoren.

Erfindungsgemäß erfolgt der biologische Abbau von Schadstoffen mittels Wasserzirkulation. Wenn das Bodenmaterial eines Geländes mit Schadstoffen belastet ist, trifft dies in den meisten Fällen auch für das dort befindliche Grundwasser zu. In jedem Fall ist für die Reinigung mittels biologischem Abbau der Schadstoffe eine Reinigung von Wasser erforderlich.

Organische Schadstoffe können biologisch vom Wasser getrennt werden, da Kohlenwasserstoffe mittels Mikroorganismen abgebaut werden können. Falls das Wasser Schwermetalle enthält, folgt der biologischen Behandlung eine Ionen-Tausch-Behandlung, bei der Schwermetalle gegenüber dem Wasser in eine Säurelösung konzentriert werden, die in gewerblichen Prozessen wiederverwendbar ist.

In vielen Fällen ist es möglich, Bodenmaterial und Grundwasser eines schadstoffbelasteten Geländes "in situ", d. h. an Ort und Stelle, zu reinigen. Das bedeutet, daß das Bodenmaterial nicht ausgehoben werden muß. Vielmehr wird diese Art der Behandlung erfindungsgemäß an Ort und Stelle vorgenommen. Dabei wird mit Luft bzw. Sauerstoff beladenes Wasser, das auch Nährstoffe und Additive enthält, in das Bodenmaterial infiltriert und eingespritzt. Das schadstoffbeladene bzw. verunreinigte Grundwasser wird hochgepumpt, gefiltert und sodann wiederverwendet.

Eine solche Behandlung ist in freiem Gelände ohne weiteres möglich, kann jedoch auch unter vorhandenen Gebäuden und unter Straßen durchgeführt werden, ohne die Gebäude abreißen oder die Straßen aufreißen zu müssen. Das ist besonders dann von Interesse, wenn ein neues Gebäude bereits auf einem noch zu behandelnden bzw. zu entgiftenden Gelände errichtet worden ist oder errichtet wird.

In anderen Fällen ist es aber notwendig, das schadstoffbelastete bzw. verunreinigte oder vergiftete Bodenmaterial für die Reinigung und Regeneration auszuheben und zu entfernen, beispielsweise wenn eine Baugrube ausgehoben werden muß. In derartigen Fällen wird die erfindungsgemäße Behandlung "ex situ" durchgeführt, d. h. an einem anderen Ort als dem Ort, an welchem sich das kontaminierte Bodenmaterial befand. Diese Art der Behandlung ist kostspieliger, weil das Bodenmaterial insgesamt entfernt und transportiert werden muß. Hinzu kommt, daß ein anderes Gelände für die Reinigung und Regeneration benötigt wird und hierzu vielfach behördliche Genehmigungen erforderlich sind.

Wenn jedoch auf einem Gelände, von welchem kontaminiertes bzw. verunreinigtes Bodenmaterial ausgehoben werden muß, ausreichend Platz vorhanden ist, um die Behandlung des ausgehobenen Bodenmaterials auf diesem Gelände vorzunehmen, so läßt sich die ex situ-Behandlung von ausgehobenem Bodenmaterial preiswerter und ohne spezielle behördliche Genehmigungen ausführen.

In vielen Kommunen befinden sich alte Industriegelände, deren Bodenmaterial schwer verunreinigt bzw. stark mit Schadstoffen belastet ist. Aber auch früher militärisch genutzte Gelände sind häufig zumindest teilweise stark mit Schadstoffen belastet. Da die Kosten für die herkömmliche Reinigung derartiger Gelände häufig höher als der Wert der gereinigten bzw. schadstoffentsorgten Immobilie sind, werden derartige schadstoffbelastete Gelände nicht selten "vergessen", d. h. man läßt diese Gelände liegen und führt sie keiner neuen Verwendung zu, weil die damit verbundenen Kosten zu hoch erscheinen.

Auch in solchen Fällen kann die vorliegende Erfindung Abhilfe schaffen, weil sie einen Weg weist, wie schadstoffbelastete und damit verunreinigte und insbesondere schwer verunreinigte Böden bzw. Bodenmaterialien und ganz speziell Erdreich kostengünstig gereinigt und regeneriert werden können, damit sie für eine erneute problemlose Benutzung wieder zur Verfügung stehen.

Die biologische Behandlung von schadstoffbelastetem bzw. verunreinigtem Bodenmaterial und Grundwasser im betreffenden Gelände und in situ, d. h. an Ort und Stelle, ist nicht einfach. Da die Umstände und Bedingungen verunreinigter Gelände für natürliche Behandlung bzw. Regeneration im allgemeinen sehr ungünstig sind, wird ein biologischer Abbau von Kohlenwasserstoffen vielfach für nicht anwendbar gehalten.

Um eine erfolgreiche biologische Reinigung einleiten und steuern zu können, werden erfindungsgemäß die Bedingungen im Bodenmaterial bzw. bei der Aufbereitung desselben vollständig geändert. In vielen Fällen wird erfindungsgemäß nur Wasser als Trägermedium für Sauerstoff, Nährstoffe und Additive benutzt, um einen schnellen biologischen Abbau von Kohlenwasserstoffen zu bewirken. In einigen Fällen ist es erfindungsgemäß aber auch möglich, zusätzlich das Bodenmaterial mit Vakuumpumpen zu belüften. Da erfindungsgemäß jedes Bodenmaterial langsam aber sicher mit Sauerstoff, Nährstoffen und Additiven infiltriert werden kann, um ihm das jeweils notwendige Behandlungsmittel zuzuführen, ist eine Reinigung und Regeneration des kontaminierten Bodenmaterials und insbesondere Erdreichs mit bisher nicht erreichbar geringen Kosten möglich.

Da die Umstände und Gegebenheiten jedes kontaminierten Geländes unterschiedlich sind, weist die erfindungsgemäße Vorrichtung vorzugsweise kleine Bau-Module auf, die zu größeren Einheiten zusammengebaut bzw. miteinander verbunden werden können, um eine für den jeweiligen Anwendungsfall passende vollständige Anlage zusammenstellen zu können.

Eine solche Anlage kann erfindungsgemäß einzelne biologische Wasser- und Luftfilter, Luftstripper, eisenentfernende Filter, Ionentauscher, die wahlweise für die jeweils vorhandenen Schwermetalle ausgelegt sind, Kohlenstoffilter (chlorinierte Kohlenwasserstoffe) und eine zentrale Pumpe sowie entfernt angeordnete Steuereinheiten aufweisen.

Diese Anlage kann als mobile Einheit auf einem Fahrzeug angeordnet sein und von dem Antriebsmotor des Fahrzeuges angetrieben werden, was insbesondere für in-situ-Behandlungen von Interesse ist.

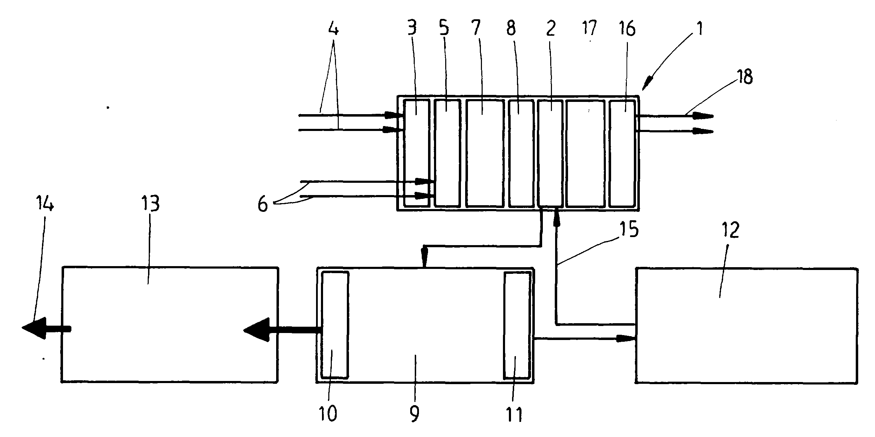

In der Zeichnung ist in einer einzigen Zeichnungsfigur zur weiteren Erläuterung der Erfindung ein Ausführungsbeispiel einer hierfür vorgesehenen Vorrichtung in einem Blockschaltbild schematisch dargestellt.

Die in der Zeichnung gezeigte Vorrichtung 1 weist eine Mehrzahl von Modulen auf, die wahlweise vorzusehen sind und miteinander verbunden werden, um Gelände verschiedenster Größen je nach Bedarf von Schadstoffen oder sonstigen Verunreinigungen befreien zu können. So lassen sich Gelände von einer Grundfläche von beispielsweise 10 m² bis zu einer Größe von mehreren Hektar reinigen und regenerieren, um das Bodenmaterial dieser Gelände preiswert einer erneuten unbedenklichen Verwendung zuführen zu können.

Die Vorrichtung 1 weist in Modulbauweise zentrale Pumpen 2, am Einlaufende eine Pumpe 3 zum Heranpumpen von Grundwasser oder sonstigem Behandlungswasser gemäß Pfeilen 4, eine Pumpe 5 für Luft, welche im Bodenmaterial bzw. Untergrund befindliche Luft gemäß Pfeilen 6 heranbefördert, einen Öl-Wasser-Separator 7 sowie einen Ölabscheider 8, die mit der Saugseite der zentralen Pumpen 2 verbunden sind, auf.

An die zentralen Pumpen 2 ist ein Luftstripper 9 angeschlossen, der eine Pumpe 10 für Abluft und eine Pumpe 11 für Wasser aufweist, um das im Luftstripper 9 von der Luft getrennte Wasser in einen biologischen Filter 12 zu fördern. Die im Luftstripper 9 vom Wasser getrennte Luft wird von der Pumpe 10 einem biologischen Luftfilter 13 zugeführt und aus diesem gemäß einem Pfeil 14 gereinigt in die Atmosphäre abgelassen.

Das im biologischen Wasser-Filter 12 behandelte Wasser gelangt durch eine Saugleitung 15 der zentralen Pumpen 2 zu einer dieser Pumpen zurück und wird von dieser zu einer weiteren Pumpe 16 gefördert. Zwischen den zentralen Pumpen 2 und der Pumpe 16 ist eine Dosiervorrichtung 17 für die Zugabe von Nährstoffen vorgesehen, um die biologische Behandlung des von den Pumpen 2 und 16 geförderten Wassers zu verbessern.

Das von der Pumpe 16 geförderte Wasser wird gemäß Pfeilen 18 entweder in das Abwassersystem abgeleitet oder einer erneuten Benutzung innerhalb der erfindungsgemäßen Vorrichtung zugeführt.

Als Beispiel für die Wirksamkeit der erfindungsgemäßen Vorrichtung und insbesondere für ein kleines modulares System dieser Vorrichtung sei angegeben, daß diese Vorrichtung geeignet ist, das Bodenmaterial einer Tankstelle zu 99,99 % (± 100 g Treibstoff pro Stunde bei 5 qm³ pro Stunde) zu reinigen und zu regenerieren.

Alle Teile bzw. Module der Vorrichtung können zu einer kompakten Einheit zusammengestellt auf einem Fahrzeug wie einem LKW angeordnet werden, um einen mobilen Einsatz der Vorrichtung an Ort und Stelle zu ermöglichen, d. h. für eine in-situ-Behandlung oder auch für eine ex-situ-Behandlung an dem jeweiligen Ort der Lagerung des ausgehobenen kontaminierten Bodenmaterials. Der Antriebsmotor des Fahrzeuges kann dabei auch als Antrieb für die erfindungsgemäße Vorrichtung dienen.

Die erfindungsgemäße Vorrichtung hat vorzugsweise biologische Festbett-Filter und außerdem Schwermetall-Filter, die eine Wasserreinigung für Schwermetall-Entzug ermöglichen. Außerdem kann die Vorrichtung eisenabscheidende Filter aufweisen, die mit eigenen Pumpen und einer Eisenschlamm-Verarbeitung ausgestattet sind.

Da die Filter vorzugsweise auf einem Fahrzeug wie einem LKW angeordnet sein können, ist ein mobiler Einsatz gewährleistet.

Ferner kann wenigstens ein Sensor vorgesehen sein, der im zu behandelnden Bodenmaterial als Kontrolle für die in Filtration des für die Bearbeitung vorgesehenen Wassers eingesetzt wird.

Der bzw. die Luftstripper hat bzw. haben Kompostfilter zum Abscheiden von Benzin und anderen flüchtigen Kohlenwasserstoffen. Dabei kann in Strömungsrichtung hinter dem Stripper ein Biofilter für Wasser vorgesehen sein, um Dieselöl und nicht flüchtige Kohlenwasserstoffe aus dem Wasser zu entfernen.

Die Vorrichtung kann auch einen Sanierungscontainer aufweisen, der mit einem automatischen Meß- und Regelsystem versehen ist und die biologischen Wasserfilter und die Filter zum Abscheiden von Eisen umfaßt, wobei diese Filter für große Kapazität ausgelegt sein können. Dabei kann auch Grundwasser gereinigt werden.

Zusätzlich kann ein Luftblasdetektor mit automatischem Kanalwechsel vorgesehen sein. Auch ist eine regelbare Flüssigkeits-Ringpumpe zweckmäßig.

Da die erfindungsgemäße Vorrichtung vorzugsweise aus einzelnen Modulen zusammengesetzt ist, kann sie für den jeweiligen Anwendungsfall individuell zusammengestellt werden. Ist die Vorrichtung auf einem Fahrzeug wie einem LKW installiert, kann der Antriebsmotor dieses Fahrzeuges als Energiequelle benutzt werden. Dabei ist es auch möglich, Abfallwärme des Antriebsmotores oder anderer Elektromotore und Pumpen zu benutzen, um einen Wärmetauscher mit Abfallwärme zu versorgen, mit deren Hilfe das aufzubereitende Bodenmaterial für die Bearbeitung erwärmt werden kann, damit beispielsweise flüchtige Bestandteile ohne Filtration ausgetrieben werden können, insbesondere durch Verdunstung. Die hierfür benötigte Prozeßwärme kann aber auch ganz oder teilweise von einem Solarcollector geliefert werden.

## Patentansprüche

1. Verfahren zum biologischen Reinigen und Regenerieren von kontaminiertem Bodenmaterial wie Erdreich oder dgl.,
**dadurch gekennzeichnet**,
daß durch das Bodenmaterial Wasser zwangsweise hindurchgeleitet und danach zum Abtrennen von aus dem Bodenmaterial mitgenommenen Fremdstoffen das Wasser filtriert wird.

2. Verfahren nach Anspruch 1, dadurch gekennzeichnet, daß das Wasser zonenweise gesteuert durch das kontaminierte Bodenmaterial hindurchgeleitet und danach filtriert wird.

3. Verfahren nach Anspruch 1 oder 2, dadurch gekennzeichnet, daß das Wasser intermittierend durch das kontaminierte Bodenmaterial hindurchgeleitet wird.

4. Verfahren nach einem der Ansprüche 1 bis 3, dadurch gekennzeichnet, daß mit einem erhöhten Sauerstoffgehalt, mit Nährstoffen und Additiven beladenes Wasser durch das Bodenmaterial hindurchgeleitet wird.

5. Verfahren nach einem der Ansprüche 1 bis 4, dadurch gekennzeichnet, daß das Bodenmaterial zwangsweise belüftet wird.

6. Verfahren nach Anspruch 4, dadurch gekennzeichnet, daß Luft durch das Bodenmaterial gesaugt wird.

7. Verfahren nach einem der Ansprüche 1 bis 6, dadurch gekennzeichnet, daß mit dem Wasser Luft durch das Bodenmaterial hindurchgeleitet wird.

8. Verfahren nach Anspruch 7, dadurch gekennzeichnet, daß Wasser und Luft nach dem Hindurchleiten durch das Bodenmaterial voneinander getrennt und danach separat biologisch filtriert werden.

9. Verfahren nach einem der Ansprüche 1 bis 8, dadurch gekennzeichnet, daß das Wasser vor dem Infiltrieren in das Bodenmaterial erwärmt wird.

10. Verfahren nach einem der Ansprüche 1 bis 9, dadurch gekennzeichnet, daß beim Regenerieren eines aus dem Wasser Eisen entfernenden Filters der entstandene Eisenschlamm biologisch von Kohlenwasserstoffen gereinigt wird.

11. Vorrichtung zum Durchführen des Verfahrens nach einem der Ansprüche 1 bis 10, dadurch gekennzeichnet, daß sie wenigstens eine Pumpe (2; 3; 5; 10; 11; 16) für die Zirkulation von Wasser und/oder Luft sowie separate Filter (12; 13) für biologische Reinigung von Wasser und/oder Luft aufweist.

12. Vorrichtung nach Anspruch 11, dadurch gekennzeichnet, daß in Strömungsrichtung vor den Filtern (12; 13) für Wasser und Luft ein Stripper (9) zum Trennen des schadstoffbelasteten Wassers von der schadstoffbelasteten Luft angeordnet ist.

13. Vorrichtung nach Anspruch 11 oder 12, dadurch gekennzeichnet, daß vor dem Stripper (9) und/oder den Filtern (12; 13) ein eisenentfernender Filter vorgesehen ist.

14. Vorrichtung nach einem der Ansprüche 11 bis 13, dadurch gekennzeichnet, daß sie einen Ölabscheider aufweist.

15. Vorrichtung nach einem der Ansprüche 11 bis 14, dadurch gekennzeichnet, daß sie einen Öl-Wasser-Separator (7) aufweist.

16. Vorrichtung nach einem der Ansprüche 11 bis 15, dadurch gekennzeichnet, daß sie eine Dosiervorrichtung (17) für die Zugabe von Nährstoffen aufweist.

17. Vorrichtung nach einem der Ansprüche 11 bis 16, dadurch gekennzeichnet, daß ihre einzelnen Bauteile als beliebig kombinierbare und zusammensetzbare Module ausgebildet sind.

18. Vorrichtung nach einem der Ansprüche 11 bis 17, dadurch gekennzeichnet, daß ihre einzelnen Bauteile als mobile Anlage auf einem Fahrzeug angeordnet sind.

19. Vorrichtung nach einem der Ansprüche 11 bis 18, dadurch gekennzeichnet, daß sie zum Erwärmen des in das Bodenmaterial zu infiltrierenden Wassers wenigstens einen Wärmetauscher aufweist, der mit Wärme von einem Sonnenkollector und/oder von einem Motor und/oder einer Pumpe mit Abfall-Wärme versorgt wird.
